**Europäisches Patentamt**

**European Patent Office**

**Office européen des brevets**

(19)

(11) Veröffentlichungsnummer : **0 135 014 B1**

# (12) EUROPÄISCHE PATENTSCHRIFT

(45) Veröffentlichungstag der Patentschrift :
20.01.88

(21) Anmeldenummer : 84108299.3

(22) Anmeldetag : 14.07.84

(51) Int. Cl.⁴ : **D 06 N  7/00, B 60 R  13/02, B 60 J  3/00, B 60 N  1/06, B 29 C  65/04, D 06 H  5/00, B 32 B  27/02**

(54) Verwendung eines bahnförmigen, hochfrequenzschweissbaren, hochfrequenzschweissbare Kunststoffasern aufweisenden Materials zur Herstellung von Gegenständen mit einer Polstereinlage durch Stoss an Stoss-Hochfrequenzschweissen.

(30) Priorität : 28.07.83 DE 3327232

(43) Veröffentlichungstag der Anmeldung :
27.03.85 Patentblatt 85/13

(45) Bekanntmachung des Hinweises auf die Patenterteilung : 20.01.88 Patentblatt 88/03

(84) Benannte Vertragsstaaten :
DE FR GB IT SE

(56) Entgegenhaltungen :
FR-A- 1 271 602
FR-E-    78 760
GB-A-   994 914
GB-A- 1 009 799
GB-A- 1 095 649
US-A- 3 790 420
GUMMI, ASBEST, KUNSTSTOFFE, Band 33, Nr. 8,
August 1980, Seiten 547-552, Stuttgart, DE; R.
BÄCKMANN: "Konfektionieren PVC-beschichteter
Gewebe - Trennen und Fügen"

(73) Patentinhaber : Gebr. Happich GmbH
Postfach 10 02 49 Clausenbrücke 1
D-5600 Wuppertal 1 (DE)

(72) Erfinder : Zwirner, Gerhard
Bachstrasse 120
D-5657 Haan (DE)

**Beschreibung**

Die Erfindung bezieht sich auf die Herstellung von Gegenständen mit einer Polstereinlage durch Stoß an Stoß-Hochfrequenzschweißen.

Bei der Herstellung von Ausstattungsteilen von Kraftfahrzeugen, wie Dachhimmel, Türverkleidungen, Kopfstützen, Armlehnen, Sitzen, Sonnenblenden usw., aber auch von ähnlichen Gegenständen außerhalb der Kraftfahrzeugindustrie, werden häufig PVC-Folien als Ummantelung verwendet, die mit einer zweiten gleichartigen Folie durch Hochfrequenzschweißen Stoß an Stoß verbunden werden. Die Hochfrequenzschweissung von Kunststoffen geht über die dielektrische Erwärmung nicht leitender polarer Stoffe im hochfrequenten elektrischen Feld vor sich. Es handelt sich hierbei um ein schnelles und sicheres Verfahren, das dazu den Vorteil hat, daß der Schweißüberstand, wenn erforderlich, unmittelbar nach der Schweißung ohne besondere Hilfsmittel abgerissen werden kann, so daß eine saubere und glatte Schweißnaht, die wenig oder gar nicht nachgearbeitet zu werden braucht, verbleibt.

Will man Fasermaterial, wie Gewebe, Gewirke, Filz u. dgl. durch Hochfrequenzschweißung Stoß an Stoß miteinander verbinden, so ergibt sich die Schwierigkeit, daß die üblichen Textilien nicht hochfrequenzschweißbar sind und daher mit einem hochfrequenzschweißbaren Material beschichtet werden müssen, um eine Verbindung miteinander zu erreichen. Ein Abreißen des Schweißüberstandes ist bei diesen Materialien nicht möglich, da das Fasermaterial durch die Hochfrequenzschweißung nicht erwärmt und erweicht wird. Derartiges beschichtetes Textilmaterial kann daher um die Schweißnaht herum nur beschnitten oder durch Stanzen vom Schweißüberstand befreit werden. In diesem Falle muß jedoch ein unschöner breiter Schweißrand stehen bleiben, der für die Haftung erforderlich ist und auch aus stanztechnischen Gründen eine gewisse Mindestgröße aufweisen muß.

Es wurde festgestellt, daß eine übliche Kunststoffaserbahn, auch wenn sie hochfrequenzschweißbar ist, und z. B. aus PVC-Fasern besteht, noch keinen einwandfreien Verbund in der Schweißnaht und auch keine saubere Schweißnaht ohne herausstehende Faserenden ergibt. Durch Schweißversuche und anschließender mikroskopischer Prüfung der Schweißnähte wurde festgestellt, daß bei den üblichen Geweben, Gewirken, Filzen und Vliesen zu wenig hochfrequenzschweißbares Material im Bereich der Schweißelektrode vorhanden ist und bei weitem nicht alle Fäden bzw. Fasern miteinander verschweißt werden. Dies führt dazu, daß nach dem Abreißen des Schweißüberstandes unmittelbar nach der Hochfrequenzschweißung nur ein Bruchteil der im Fasermaterial vorhandenen Fasern miteinander verschweißt ist, während der größere Teil zwar abgetrennt ist, aber mit den Enden frei im Bereich der Schweißnaht liegt, somit zur Festigkeit der Schweißnaht nichts beiträgt und dazu noch durch das Herausstehen der Enden aus der Schweißnaht zu einem unschönen Aussehen führt.

Die zuvor geschilderten Nachteile sind auch bei einem durch die GB-A-994 914 bekanntgewordenen Material gegeben denn dieses bekannte Material weist neben hochfrequenzschweißbaren Kunststoffasern einen beträchtlichen Anteil, und zwar in der Größenordnung von 30 bis 70 % nichthochfrequenzschweißbarer Fasern auf. Solche nichthochfrequenzschweißbaren Fasern können aber, wie schon weiter oben geschildert, bei einer Hochfrequenzschweißung nicht erwärmt und erweicht werden, so daß auch ein Abreißen des Schweißüberstandes bei diesem Material nicht möglich ist.

Überraschenderweise haben Schweißversuche jedoch gezeigt, daß eine einwandfreie Stoß an Stoß-Hochfrequenzschweißung von hochfrequenzschweißbarem Material dann möglich ist, wenn das Material ausschließlich hochfrequenzschweißbare Bestandteile und ein Flächengewicht von mindestens 300 g/m² aufweist. Die Erfindung besteht demgemäß in der Verwendung eines bahnförmigen, ganz oder teilweise aus Fasern gebildeten, ausschließlich hochfrequenzschweißbare Bestandteile aufweisenden Materials mit einem Flächengewicht von mindestens 300 g/m² zur Herstellung von Gegenständen mit einer Polstereinlage durch Stoß an Stoß-Hochfrequenzschweißen.

Durch die Erfindung wurde nun die Aufgabe gelöst, eine einwandfreie Stoß an Stoß-Hochfrequenzschweißung von Kunststoffasermaterial bei der Herstellung von Gegenständen mit einer Polstereinlage zu erzielen, wobei der Schweißüberstand, wie bei einer PVC-Folie, unmittelbar nach dem Schweißvorgang abreißbar ist. Es hat sich gezeigt, daß sich durch die Verwendung des genannten Materials zwischen den Schweißelektroden genügend hochfrequenzschweißbares Material befindet, um eine ununterbrochene Schweißnaht mit Verschweißung praktisch aller Fasern zu erreichen, so daß nach dem Abreißen des Schweißüberstandes nicht nur eine einwandfreie Stoß an Stoß-Verbindung gewährleistet ist, sondern auch das Herausstehen von nicht verschweißten Faserenden vermieden wird.

Es kann ein als Gewebe, Gewirke, Filz u. dgl. ausgebildetes Material verwendet werden, oder auch ein Material, das einseitig durch Kaschieren, Bestreichen usw. mit hochfrequenzschweißbarem Kunststoff beschichtet ist und zusammen mit der Kunststoffbeschichtung ein Flächengewicht von mindestens 300 g/m² aufweist. Das Beschichtungsmaterial ist vorzugsweise folienartig ausgebildet, es kann jedoch auch in Form eines Vlieses aufkaschiert sein.

Aus wirtschaftlichen Gründen sollte das Flächengewicht des Kunststoffasermaterials zusammen mit der gegebenenfalls vorgesehenen Beschichtung 1500 g/m² nicht überschreiten.

Vorzugsweise liegt das Flächengewicht des Kunststoffasermaterials allein oder zusammen mit der Kunststoffbeschichtung zwischen 435 und 575 g/m², wobei das Flächengewicht der Kunststoffaserbahn höher, gleich oder kleiner als das der Beschichtung sein kann.

Vorzugsweise steht das Flächengewicht der Kunststoffaserbahn zu demjenigen der Beschichtung im Verhältnis 1 : 2 bis 1 : 3.

Das Kunststoffasermaterial muß, wie schon erwähnt, hochfrequenzschweißbar sein und besteht vorzugsweise aus PVC sowohl für die Kunststoffaserbahn als auch für die Beschichtung, jedoch sind auch andere Kombinationen möglich, unter der Voraussetzung, daß die dielektrischen Eigenschaften der Materialien einigermaßen übereinstimmen.

Die Kunststoffaserbahn weist eine Textilstruktur auf und besteht aus einem Gewebe, Gewirke, Gestrick oder Geflecht oder aus Filz oder Vlies. Die Beschichtung kann ein Vlies oder ein Filz sein oder aber folienartig durch Kaschieren, Vernadeln oder Bestreichen auf eine Seite der Kunststoffaserbahn aufgebracht sein. Wichtig ist eine feste Verbindung zwischen der Kunststoffaserbahn und dem Beschichtungsmaterial.

Das erfindungsgemäß verwendete hochfrequenzschweißbare Kunststoffmaterial kann in der Kraftfahrzeug-Industrie bei der Herstellung von Dachhimmeln, Türverkleidungen, Kopfstützen, Armlehnen, Sitzen, Sonnenblenden usw. verwendet werden, aber auch auf anderen Gebieten, z. B. zur Herstellung von gepolsterten Kleiderbügeln eingesetzt werden. Anwendungsmöglichkeiten sind überall da gegeben, wo dieses Material auf rationelle Weise mit einer entsprechenden Bahn Stoß an Stoß verbunden werden soll und Nacharbeit, wie Stanzen oder Beschneiden der Schweißnaht vermieden werden soll.

## Patentansprüche

1. Verwendung eines bahnförmigen, ganz oder teilweise aus Fasern gebildeten, hochfrequenzschweißbaren Materials, dessen Fasern ausschließlich aus hochfrequenzschweißbaren Kunststoffasern bestehen und das ein Flächengewicht von mindestens 300 g/m² aufweist zur Herstellung von Gegenständen mit einer Polstereinlage durch Stoß an Stoß-Hochfrequenzschweißen.

2. Verwendung eines Materials nach Anspruch 1, das als Gewebe, Gewirke, oder Filz ausgebildet ist.

3. Verwendung eines Materials nach Anspruch 1 oder 2, das einseitig durch Kaschieren, Bestreichen usw. mit hochfrequenzschweißbarem Kunststoff beschichtet ist und zusammen mit der Kunststoffbeschichtung ein Flächengewicht von mindestens 300 g/m² aufweist.

4. Verwendung eines Materials nach einem oder mehreren der Ansprüche 1 bis 3, mit einem Flächengewicht von höchstens 1 500 g/m².

5. Verwendung eines Materials nach einem oder mehreren der Ansprüche 1 bis 4 mit einem Flächengewicht zwischen 435 g/m² und 575 g/m².

6. Verwendung eines Materials nach einem oder mehreren der Ansprüche 3 bis 5, bei dem das Flächengewicht der Kunststoffaserbahn höher als das der Beschichtung ist.

7. Verwendung eines Materials nach einem oder mehreren der Ansprüche 3 bis 5, bei dem das Flächengewicht der Kunststoffaserbahn niedriger als das der Beschichtung ist.

8. Verwendung eines Materials nach Anspruch 7, bei dem das Flächengewicht der Kunststoffaserbahn zu demjenigen der Beschichtung im Verhältnis 1 : 2 bis 1 : 3 steht.

9. Verwendung eines Materials nach einem oder mehreren der Ansprüche 1 bis 8, bei dem zumindest die Kunststoffasern aus PVC-Fasern bestehen.

## Claims

1. Utilisation of a web-shaped high-frequency weldable material consisting of or containing fibres, the fibres of which are exclusively high-frequency weldable synthetic fibres and the weight of which per unit area is at least 300 g/m², for producing a padded article by joint-to-joint high-frequency welding.

2. Utilisation of a material according to claim 1, in which the material is a woven cloth or a knitted fabric or felt.

3. Utilisation of a material according to claim 1 or claim 2, in which one side of the material is coated — by lining, brushing or the like — with a high-frequency weldable synthetic substance, and in which the weight per unit area of the material including the synthetic coating is at least 300 g/m².

4. Utilisation of a material according to any one or more of the claims 1 to 3, in which the material's maximum weight per unit area is 1 500 g/m².

5. Utilisation of a material according to any one or more of the claims 1 to 4, in which the material's weight per unit area is between 435 g/m² and 575 g/m².

6. Utilisation of a material according to any one or more of the claims 3 to 5, in which the weight per unit area of the synthetic-fibres web exceeds that of the coating.

7. Utilisation of a material according to any one or more of the claims 3 to 5, in which the weight per unit area of the synthetic-fibres web is less than that of the coating.

8. Utilisation of a material according to claim 7, in which the ratio of the weight per unit area of the synthetic fibres web to that of the coating is between 1 : 2 and 1 : 3.

9. Utilisation of a material according to any one or more of the claims 1 to 8, in which the synthetic fibres are PVC fibres.

**Revendications**

1. Utilisation d'un matériau en bande pouvant être soudé par soudure à haute fréquence, constitué en totalité ou en partie par des fibres, dont les fibres sont exclusivement des fibres synthétiques pouvant être soudées par soudure à haute fréquence et dont le poids par unité de surface est d'au moins 300 g/m², en vue de la fabrication d'objets comprenant une garniture de rembourrage par soudure à haute fréquence en bord à bord.

2. Utilisation d'un matériau selon la revendication 1, constitué sous forme d'un tissu tissé, d'un tissu à mailles ou d'un feutre.

3. Utilisation d'un matériau selon la revendication 1 ou 2, qui est recouvert sur un côté par contrecollage, enduction, etc. d'une matière synthétique pouvant être soudée par soudure à haute fréquence et dont le poids par unité de surface, avec le revêtement en matière synthétique, est d'au moins 300 g/m².

4. Utilisation d'un matériau selon une ou plusieurs des revendications 1 à 3, dont le poids par unité de surface est au maximum de 1 500 g/m².

5. Utilisation d'un matériau selon une ou plusieurs des revendications 1 à 4, dont le poids par unité de surface est compris entre 435 g/m² et 575 g/m².

6. Utilisation d'un matériau selon une ou plusieurs des revendications 3 à 5, dont le poids par unité de surface de la bande de fibres synthétiques est supérieur à celui du revêtement.

7. Utilisation d'un matériau selon une ou plusieurs des revendications 3 à 5, dont le poids par unité de surface de la bande de fibres synthétiques est inférieur à celui du revêtement.

8. Utilisation d'un matériau selon la revendication 7, dont le rapport entre le poids par unité de surface de la bande de fibres synthétiques et celui du revêtement est compris entre 1 : 2 et 1 : 3.

9. Utilisation d'un matériau selon une ou plusieurs des revendications 1 à 8, dans lequel les fibres synthétiques au moins sont constituées par des fibres de CPV.